# EUROPÄISCHE PATENTSCHRIFT

(11) **EP 0 701 693 B1**
(45) Veröffentlichungstag und Bekanntmachung des Hinweises auf die Patenterteilung: **26.09.2001**
(21) Anmeldenummer: 94914339.0
(22) Anmeldetag: 11.05.1994
(51) Int. Cl.: G01N 27/407

(54) **GASSENSOR**
GAS SENSOR
DETECTEUR DE GAZ

(30) Priorität: 05.06.1993 DE 4318789
(43) Veröffentlichungstag der Anmeldung: 20.03.1996
(73) Patentinhaber: ROBERT BOSCH GMBH, 70442 Stuttgart (DE)
(72) Erfinder: FRIESE, Karl-Hermann, D-71229 Leonberg (DE); WEYL, Helmut, D-71701 Schwieberdingen (DE); FRIES, Romuald, D-71287 Weissach (DE); WIEDENMANN, Hans-Martin, D-70195 Stuttgart (DE); HANS, Anton, D-71640 Ludwigsburg (DE)
(86) Internationale Anmeldenummer: DE9400537
(87) Internationale Veröffentlichungsnummer: WO9429710

(56) Entgegenhaltungen:
- EP-A- 0 087 626
- DE-A- 2 350 253
- DE-A- 2 645 573
- DE-A- 2 654 892
- US-A- 4 986 892

## Beschreibung

### Stand der Technik

Die Erfindung geht aus von einem Gassensor nach der Gattung des Hauptanspruchs.

Die zur Bestimmung des Sauerstoffgehaltes in Abgasen von Verbrennungsmotoren eingesetzten Sensorelemente besitzen einerseits eine sogenannte Fingerbauform, bei der ein elektrochemischer Festelektrolyt als einseitig geschlossenes Rohr ausgeführt ist, welches im Gehäuse dicht festgelegt ist. Bei den andererseits bekannten, sogenannten Plättchensonden, ist ein planarer sauerstoffionenleitender Festelektrolyt ebenfalls im Gehäuse dicht fixiert.

Bei den Fingersonden unterscheidet man zwischen potentialfreien und potentialgebundenen Gassensoren. Bei den potentialgebundenen Fingersonden wird die Leiterbahn der äußeren Elektrode mittels eines elektrisch leitenden Dichtrings mit dem Gehäuse kontaktiert. Bei den potentialfreien Fingersonden wird jeder Elektrodenanschluß direkt einem Steuergerät zugeführt, so daß keine elektrische Kontaktierung mit dem Gehäuse erlaubt ist.

Eine Dichtungsanordnung für einen Gassensor der gattungsgemäßen Art ist aus der DE-A-23 50 253 bekannt, bei der ein Sensorelement in Fingerbauform in einem Gehäuse mittels einer Dichtungsanordnung fixiert ist. Die Dichtungsanordnung ist dreiteilig aufgebaut und besteht aus zwei verformbaren dünnwandigen Metalldichtringen, zwischen denen eine Dichtung aus einem pulverförmigen Dichtungsmittel angeordnet ist. Als Dichtungsmittel wird dabei Graphitpulver oder Kupferpulver verwendet. Beim Einbau des Sensorelements in das Gehäuse wird zunächst das Dichtungsmittel in Pulverform zwischen die Metalldichtringe gegeben. Auf das Sensorelemt wird danach eine Preßkraft aufgebracht, durch die das Pulver des Dichtungsmittls verdichtet und die Dichtwirkung zwischen Sensorelement und Innenwand des Gehäuses erzeugt wird.

Eine ähnliche Ausführung einer Dichtungsanordnung geht aus der DE-A-26 54 892 hervor, bei der zwischen zwei massiven metallischen Dichtringen eine Zusatzdichtung aus einem pulverförmigen, elektrisch leitenden Dichtungsmitteln angeordnet ist. Auch hier wird das Dichtungsmittel in Pulverform eingesetzt. Sowohl das pulverförmige Dichtungsmittel als auch die metallischen Dichtringe haben die Aufgabe, eine elektrische Kontaktierung zwischen dem Gehäuse und der äußeren Elektrodenschicht herzustellen.

Aus der EP-A-087 626 ist ein Gassensor mit einem plättchenförmigen Sensorelement bekannt, bei dem das Sensorelement von einem zwischen zwei massiven Keramikformteilen verdichteten Elektroisolierpulver im Gehäuse fixiert wird. Das Elektroislierpulver wird in Pulverform eingesetzt und zwischen den Keramikformteilen verdichtet.

Die in dem US-Patent 4 986 892 beschriebene Ausführung weist drei massive Keramikformteile auf, zwischen denen Talkum-Pulver-Dichtungen angeordnet sind. Auch hier wird eine Preßkraft auf die massiven Keramikformteile aufgebracht, so daß sich das dazwischenliegende Talkum-Pulver verdichtet.

In der DE-OS 41 26 378 wird ferner eine Dichtung für eine Plättchensonde beschrieben, die sich zwischen zwei im Gehäuse angeordneten keramischen Formteilen befindet, wobei die keramische Formteile das Sensorelement im Gehäuse festlegen. Die Dichtung besteht dabei aus Speckstein.

Nachteilig bei den bekannten, aus mehreren Dichtungselementen bestehenden Dichtungsanordnungen ist, daß das Dichtungsmittel der Zusatzdichtung beim Einbau des Sensorelements in das Gehäuse in Pulverform eingesetzt wird, wodurch sich die Zusatzdichtung nur schwierig handhaben läßt.

Die andererseits bekannten Dichtungen, die aus einem bei niedrigen Sintertemperaturen vorgesinterten Dichtring bestehen, sind mit dem Nachteil behaftet, daß selbst bei hohen Preßkräften nach dem Verdichten eine Restporosität erhalten bleibt, so daß Wasser und Kraftstoff infolge kapillarer Kräfte durch die Dichtung diffundieren kann.

### Vorteile der Erfindung

Die erfindungsgemäße Dichtung mit den kennzeichnenden Merkmalen des Hauptanspruchs hat demgegenüber den Vorteil, daß sie für Flüssigkeiten, insbesondere Kraftstoff, undurchlässig ist. Eine Dichtheit in Bezug auf flüssigen Kraftstoff ist insbesondere dann gefordert, wenn bei Startschwierigkeiten des Verbrennungsmotors Kraftstoff in die Auspuffleitung übertritt. Die wirksame Abdichtung wird erreicht, wenn die Dichtkörper und die Zusatzdichtung gemeinsam im Gehäuse verpreßt werden. Dadurch legt sich die Zusatzdichtung spaltfrei zwischen Sensorelement und Gehäuse. Als besonders geeignetes Material für die Zusatzdichtung hat sich Graphit herausgestellt, welcher aufgrund seiner Lamellenstruktur bei entsprechend hoher Verdichtung wasser- und kraftstoffundurchlässig ist.

### Zeichnung

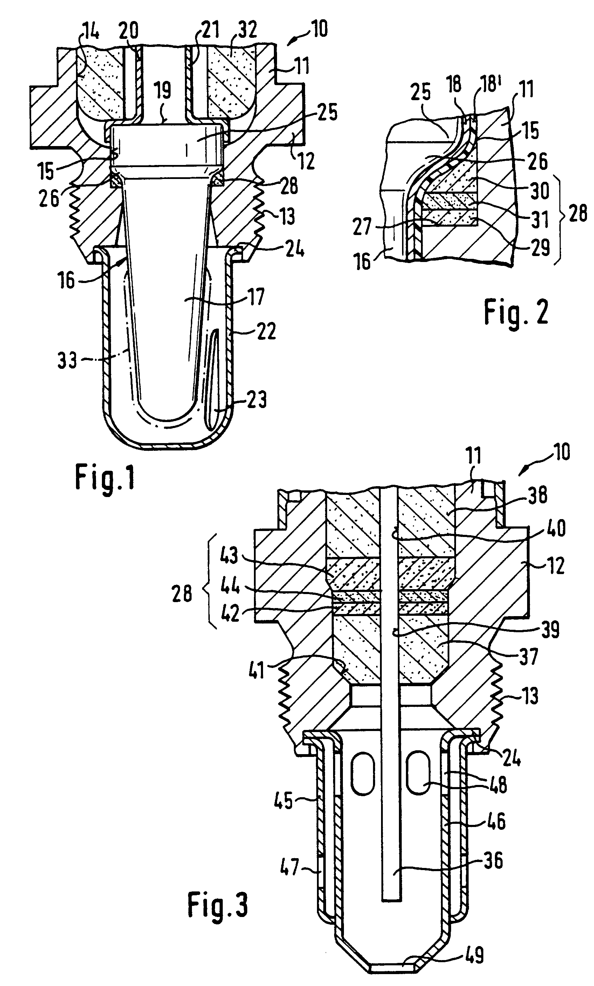

Zwei Ausführungsbeispiele der Erfindung sind in der Zeichnung dargestellt und in der nachfolgenden Beschreibung näher erläutert. Es zeigen Figur 1 einen Längsschnitt durch den abgasseitigen Teil eines Gassensors mit einer Fingersonde, Figur 3 einen vergrößerten Aus-schnitt der Dichtung gemäß Figur 1 und Figur 2 einen Längsschnitt durch den abgasseitigen Teil eines Gassensors mit einer Plättchensonde.

### Ausführungsbeispiele

Figur 1 zeigt einen elektrochemischen Sauerstoffgassensor 10, der ein metallisches Gehäuse 11 hat, das an seiner Außenseite ein Schlüsselsechskant 12 und ein Gewinde 13 als Befestigungsmittel für den Einbau in ein nicht dargestelltes Meßgasrohr aufweist. Das Gehäuse 11 hat eine Längsbohrung 14 mit einer Aufnahme 15 für eine als Sensorelement dienende Fingersonde 16. Die Aufnahme 15 besitzt eine ringförmige Bodenfläche 27.

Die Fingersonde 16 ist ein an sich bekannter elektrochemischer Sauerstoffsensor, der bevorzugt für das Messen des Sauerstoffpartialdrucks in Abgasen Verwendung findet. Die Fingersonde 16 hat einen rohrförmigen Festelektrolytkörper 17, dessen meßgasseitiger Endabschnitt geschlossen ist. Auf der dem Meßgas ausgesetzten Außenseite ist eine nicht dargestellte Meßelektrode mit einer darübergelegten Schutzschicht 33 und auf der dem Innenraum zugewandten Seite eine einem Referenzgas, zum Beispiel Luft, ausgesetzte, ebenfalls nicht dargestellte Referenzelektrode angeordnet. Die Fingersonde 16 besitzt anschlußseitig einen wulstartigen Kopf 25 mit einer ausgebildeten Schulter 26 und einer ringförmigen Stirnfläche 19. Meßgasseitig ist die Fingersonde 16 mit Abstand von einem Schutzrohr 22 umgeben, welches für den Ein- beziehungsweise Austritt des Meßgases Öffnungen 23 besitzt. Das Schutzrohr 22 ist am meßgasseitigen Ende des Gehäuses 11 durch eine Bördelung 24 festgelegt.

Die Meßelektrode und die Referenzelektrode werden jeweils mittels Elektrodenleiterbahnen, von denen die Leiterbahn 18 der Meßelektrode in Figur 2 gezeigt ist, zur anschlußseitigen Ringfläche 19 der Fingersonde 16 geführt. Die Leiterbahn 18 ist zur Vermeidung eines Masseschlußes mit dem Gehäuse 11 mittels einer isolierenden Abdeckschicht 18' versehen. Auf der Ringfläche 19 sitzt ein Referenzelektrodenkontaktteil 20 und ein Meßelektrodenkontaktteil 21. Beide Kontaktteile 20, 21 sind mit nicht dargestellten elektrischen Anschlüssen verbunden.

Die in der Längsbohrung 14 ausgebildete Aufnahme 15 ist derart ausgeführt, daß der wulstartige Kopf 25 der Fingersonde 16 radial geführt wird und sich zwischen der Schulter 26 der Fingersonde 16 und der Bodenfläche 27 eine Dichtzone ausbildet, in der ein Dichtungspaket 28 angeordnet ist. Das Dichtungspaket 28 besitzt gemäß Figur 2 einen meßgasseitigen Dichtring 29, einen anschlußseitigen Dichtring 30 und einen dazwischen angeordnete Zusatzdichtring 31. Die beiden Dichtringe 29, 30 bestehen aus einem bei niedrigen Sintertemperaturen porös gesinterten Material, so daß sie unter einer Preßkraft jeweils deformierbar sind. Ein geeignetes Material dafür ist beispielsweise Magnesium-Aluminium-Silikat (Steatit). Der Zusatzdichtring 31 hingegen besteht beispielsweise aus Graphit, welcher ebenfalls unter Einwirkung der Preßkraft verformbar ist.

Zur Herstellung des Dichtungspakets 28 wird der vorgesinterte meßgasseitige Dichtring 29, der Zusatzdichtring 31 und der anschlußseitige vorgesinterte Dichtring 29 in die Aufnahme 15 eingesetzt. Auf den anschlußseitigen Dichtring 30 wird die Fingersonde 16 mit ihrer Schulter 26 aufgesetzt. Durch Einwirken einer Preßkraft auf die Fingersonde 16 werden die beiden Dichtringe 29, 30 derart verformt, daß sie sich der Schulter 26 und der Aufnahme 15 anpassen. Gleichzeitig wird der Zusatzdichtring 31 dabei derart komprimiert, daß eine ausreichende radiale Anpreßkraft zwischen dem Gehäuse 11 und der Fingersonde 16 entsteht, wodurch die Fingersonde 16 spaltfrei in der Längsbohrung 14 gehalten wird. Die radiale Anpreßkraft wirkt gleichmäßig auf die isolierende Abdeckschicht 18', so daß keine Beschädigung derselben auftritt.

Nachdem die Fingersonde 16 in die Aufnahme 15 eingepreßt ist, wird sie von der an den Kontaktteilen 20, 21 angreifende Isolierhülse 32 gehalten. Durch die Einbettung des Zusatzdichtrings 31 zwischen zwei nahezu luftundurchlässige Dichtringe 29, 30 aus Keramik wird die ab ca. 600° C unter atmosphärischen Bedingungen einsetzende Oxidation des Graphits weitgehend verhindert. Dies gilt in gleicher Weise auch für metallische Zusatzdichtungen aus Nickel oder Kupfer in massiver Form oder in Form eines vorgepreßten Pulvers.

Ein zweites Ausführungsbeispiel eines Meßfühlers 10 mit einer Plättchensonde 36 zeigt Figur 3. Hierbei besitzt die Längsbohrung 14 eine schulterförmige Verengung 41, auf der ein meßgasseitiges Keramikformteil 37 aufliegt. Beabstandet vom meßgasseitigen Keramikformteil 37 ist in der Längsbohrung ein anschlußseitiges Keramikformteil 38 angeordnet. Die Längsbohrung 14 ist bei diesem Ausführungsbeispiel derart abgestuft, daß das anschlußseitige Keramikformteil 38 einen größeren Durchmesser aufweist als das meßgasseitige Keramikformteil 37. Die Keramikformteile 37 und 38 sind zentral jeweils mit einem Durchbruch 39 und 40 ausgeführt. Die Durchbrüche 39, 40 dienen zur Aufnahme der Plättchensonde 36.

Zwischen den beabstandeten Keramikformteilen 37, 38 befindet sich das Dichtungspaket 28. Das Dichtungspaket 28 besitzt ähnlich dem ersten Ausführungsbeispiel eine meßgasseitige Dichtscheibe 42 und eine anschlußseitige Dichtscheibe 43, zwischen denen eine Zusatzdichtscheibe 44 angeordnet ist, wobei die abgasseitige Dichtscheibe 43 beispielsweise stärker ausgebildet ist als die meßgasseitige Dichtscheibe 42. Außerdem ist der Übergang der Längsbohrung 14 vom weiteren Durchmesser zum engeren Durchmesser im Bereich der anschlußseitigen Dichtscheibe 43 als konischer Übergang ausgebildet. Die beiden Dichtscheibe 42 und 43 bestehen wie beim ersten Ausführungsbeispiel beispielsweise aus einem vorgesinterten Keramikmaterial. Die Zusatzdichtscheibe 44 besteht ebenfalls aus Graphit.

Die Abdichtung der Plättchensonde 36 erfolgt dadurch, daß auf das meßgasseitige Keramikformteil 37 die meßgasseitige Dichtscheibe 42, die Zusatzdichtscheibe 44, die anschlußseitige Dichtscheibe 43 sowie das anschlußseitige Keramikformteil 38 aufgelegt wird. Durch Aufbringen eines Preßdrucks werden die Dichtscheiben 42 und 43 sowie die Zusatzdichtscheibe 44 zusammengepreßt, wobei sie sich jeweils verformen. Durch die Verformung der Zusatzdichtscheibe 44 entsteht, wie beim ersten Ausführungsbeispiel, eine radiale Anpreßkraft zwischen dem Gehäuse 11 und der Plättchensonde 36, so daß die Plättchensonde 36 spaltfrei in der Längsbohrung 14 liegt. Auch hier ist die radiale Anpreßkraft derart gleichmäßig ausgebildet, daß dadurch keine Beschädigung der Plättchensonde 36 auftritt.

Beim vorliegenden zweiten Ausführungsbeispiel ist zur Vermeidung des Zutritts von Kondenswasser an die Plättchensonde 36 das Schutzrohr 22 doppelwandig ausgebildet, mit einem äußeren Schutzrohr 45 und einem inneren Schutzrohr 46. Im äußeren Schutzrohr 45 sind äußere Gasöffnungen 47 vorgesehen, zu denen axial versetzt am inneren Schutzrohr 46 innere Gasöffnungen 48 angeordnet sind. Zur besseren Durchspülung ist im Boden des inneren Schutzrohres 46 eine zusätzliche Öffnung 49 eingebracht.

Um Beschädigungen des Sensorelements beim Verpressen des Dichtungspakets 28 auszuschließen sind für die Zusatzdichtung 31 oder 44 duktile Materialen mit einer Härte einsetzbar, die geringer sein muß als die der Abdeckschicht 18' der Fingersonde 16 bzw. der verwendeten Keramik der Plättchensonde 36.

## Patentansprüche

1. Gassensor, insbesondere zur Bestimmung des Sauerstoffgehaltes in Abgasen von Verbrennungsmotoren, mit einem Sensorelement, das mittels einer Dichtung in einer Längsbohrung (14) eines Gehäuses (11) abgedichtet fixiert ist, wobei die Dichtung zwei Dichtkörper (29, 30, 42, 43) und eine zwischen den Dichtkörpern (29, 30, 42, 43) angeordnete Zusatzdichtung (31, 44) umfaßt, **dadurch gekennzeichnet, daß** die Dichtkörper (39, 30) vorgesinterte keramische Dichtringe sind, daß die vorgesinterten keramischen Dichtringe (29, 30, 42, 43) und die Zusatzdichtung (31, 34) im verbauten Zustand in der Längsbohrung (14) verpreßt sind, wobei sich beim Verpressen die vorgesinterten keramischen Dichtringe (29, 30, 42, 43) deformieren und sich die Zusatzdichtung (31, 44) derart verformt, daß das Sensorelement (16, 36) spaltfrei in der Längsbohrung (14) angeordnet ist, und daß die Zusatzdichtung (31, 44) nach dem Verpressen eine geringere Porosität als die beiden Dichtkörper (21, 30, 42, 43) aufweist.

2. Gassensor nach Anspruch 1, **dadurch gekennzeichnet, daß** die Zusatzdichtung (31, 44) aus einem duktilen Metall, vorzugsweise Nickel oder Kupfer besteht, wobei das duktile Metall als vorgepreßtes Pulver eingesetzt ist.

3. Gassensor nach Anspruch 1, **dadurch gekennzeichnet, daß** die Zusatzdichtung (31, 44) aus Graphit besteht.

## Claims

1. Gas sensor, in particular for determining the oxygen content in exhaust gases from internal-combustion engines, having a sensor element which is fixed in a sealed manner in a longitudinal bore (14) in a housing (11) by means of a seal, the seal comprising two sealing bodies (29, 30, 42, 43) and an additional seal (31, 44) arranged between the sealing bodies (29, 30, 42, 43), **characterized in that** the sealing bodies (39, 30) are presintered ceramic sealing rings, in that the presintered ceramic sealing rings (29, 30, 42, 43) and the additional seal (31, 34) are compressed in the fitted position in the longitudinal bore (14), in which case, during the compression, the presintered ceramic sealing rings (29, 30, 42, 43) are deformed and the additional seal (31, 44) is reshaped in such a manner that the sensor element (16, 36) is arranged without gaps in the longitudinal bore (14), and in that the additional seal (31, 44), after the compression, has a lower porosity than the two sealing bodies (21, 30, 42, 43).

2. Gas sensor according to Claim 1, **characterized in that** the additional seal (31, 44) consists of a ductile metal, preferably nickel or copper, the ductile metal being used as a precompacted powder.

3. Gas sensor according to Claim 1, **characterized in that** the additional seal (31, 44) consists of graphite.

## Revendications

1. Détecteur de gaz, destiné en particulier à déterminer la teneur en oxygène des gaz d'échappement de moteurs à combustion interne, comprenant un élément de détection fixé de manière étanche par une étanchéité dans un alésage longitudinal (14) d'un boîtier (11), l'étanchéité étant composée de deux corps d'étanchéité (29, 30, 42, 43) et d'une étanchéité additionnelle (31, 44) entre les corps d'étanchéité (29, 30, 42, 43),
**caractérisé en ce que**
les corps d'étanchéité (29, 30) sont des bagues d'étanchéité en céramique préfrittée, les bagues d'étanchéité (29, 30, 42, 43) en céramique préfrittée et l'étanchéité additionnelle (31, 44) une fois installées dans l'alésage longitudinal (14) étant comprimées avec pour effet que les bagues d'étanchéité (29, 30, 42, 43) en céramique préfrittée se déforment et que le joint d'étanchéité additionnelle (31, 34) se déforme de façon telle que l'élément de détection (16, 36) occupe sans fente l'alésage longitudinal, (14), cette étanchéité additionnelle (31, 44) présentant après compression une porosité plus faible que celle des deux corps d'étanchéité (29, 30, 42, 43).

2. Détecteur de gaz selon la revendication 1,
**caractérisé en ce que**
l'étanchéité additionnelle (31, 44) est faite d'un métal ductile, de préférence du nickel ou du cuivre, mis en oeuvre sous la forme de poudre précomprimée.

3. Détecteur de gaz selon la revendication 1,
**caractérisé en ce que**
l'étanchéité additionnelle (31, 44) est en graphite.
